# EUROPEAN PATENT APPLICATION

(11) **EP 2 783 805 A2**
(43) Date of publication of application: **01.10.2014**
(21) Application number: 14157568.8
(22) Date of filing: 04.03.2014
(51) Int. Cl.: B25J 9/16

(54) **Robot system, method for controlling robot, and method for producing to-be-processed material**

(30) Priority: 15.03.2013 JP 2013053306
(71) Applicant: Kabushiki Kaisha Yaskawa Denki, Kitakyushu-shi, Fukuoka 806-0004 (JP)
(72) Inventor: Izumi, Tetsuro, Kitakyushu-shi, Fukuoka 806-0004 (JP); Nakamura, Tamio, Kitakyushu-shi, Fukuoka 806-0004 (JP); Kouno, Dai, Kitakyushu-shi, Fukuoka 806-0004 (JP); Nagai, Ryoichi, Kitakyushu-shi, Fukuoka 806-0004 (JP)
(74) Representative: Viering, Jentschura & Partner Patent- und Rechtsanwälte

(57) **Abstract**

A robot system 1 includes a robot 10. A fitting member holder 102 is mounted to a distal end of the robot 10 to hold a fitting member. A receiver member 30, 30x receives the fitting member. A position determination member 50, 50x is disposed at a fixed position relative to the receiver member 30, 30x. A robot controller 11 controls the robot 10. A position identifying device 112 brings the robot 10, the fitting member 20, 20x, or the fitting member holder 102 into contact with the position determination member 50, 50x with the fitting member holder 102 holding the fitting member 20, 20x. A position identifying device 112 identifies a fitting position based on a position of the contact. A fitting control device 113 controls the robot 10 to fit the fitting member 20, 20x into the receiver member 30, 30x at the fitting position.

## Description

### BACKGROUND

### FIELD OF THE INVENTION

The present invention relates to a robot system, a method for controlling a robot, and a method for producing a to-be-processed material.

### DISCUSSION OF THE BACKGROUND

In recent years, there has been an increasing demand for automating human manual work using a robot. For example, Japanese Unexamined Patent Application Publication No. 2011-230245 discloses a robot system that uses an inner force sensor to fit a fitting member held by a hand mounted to a distal end of the robot into a receiver member.

The contents of Japanese Unexamined Patent Application Publication No. 2011-230245 is incorporated herein by reference in their entirety.

During the robot's fitting work, the relative positions of the fitting member and the receiver member may turn into an unmatched relationship in some cases before the fitting member and the receiver member are fitted to each other (that is, the relative positions of the fitting member and the receiver member can be displaced from each other). The displacement in the relative positions can hinder accurate fitting work and thus make it difficult to maintain a constant level of work quality.

Thus, there is a need in this technical field for a robot system, a method for controlling a robot, and a method for producing a to-be-processed material that ensure accurate fitting work by the robot to maintain a constant level of work quality.

### SUMMARY

According to one aspect of the present invention, a robot system 1 includes a robot 10, a fitting member holder 102, a receiver member 30, 30x, a position determination member 50, 50x, and a robot controler 11. The fitting member holder 102 is mounted to a distal end of the robot 10 to hold a fitting member. The receiver member 30, 30x is configured to receive the fitting member. The position determination member 50, 50x is disposed at a fixed position relative to the receiver member 30, 30x. The robot controller 11 is configured to control the robot 10. The robot controller 11 includes a position identifying device 112 and a fitting control device 113. The position identifying device 112 is configured to bring at least one of the robot 10, the fitting member 20, 20x, and the fitting member holder 102 into contact with the position determination member 50, 50x with the fitting member holder 102 holding the fitting member 20, 20x. The position identifying device 112 is configured to identify a fitting position based on a position of the contact as a reference position. The fitting control device 113 is configured to control the robot 10 to fit the fitting member 20, 20x into the receiver member 30, 30x at the fitting position.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram schematically illustrating a robot system according to an embodiment;
FIG. 2 is a side view of a robot included the robot system shown in FIG. 1;
FIG. 3 is a functional block diagram of a controller;
FIGs. 4A to 4C illustrate images associated with identifying a fitting position according to the embodiment;
FIGs. 5A to 5C illustrate images associated with identifying a fitting position that corresponds to a position determination member; and
FIG. 6 is a flowchart of a procedure for fitting work.

### DESCRIPTION OF THE EMBODIMENTS

The embodiments will now be described with reference to the accompanying drawings, wherein like reference numerals designate corresponding or identical elements throughout the various drawings.

In a robot system according to this embodiment, a robot performs various kinds of work such as processing and assembly on a workpiece (to-be-processed material). The workpiece may be a single part, or a product or a semi-processed product formed of a combination of a plurality of parts. In particular, the robot fits/inserts (hereinafter simply referred to as "fits", "fit", "fitted", or "fitting") a fitting member (which is a workpiece) into a receiver member. The robot system according to this embodiment utilizes inner force sensor technology to perform impedance control, described later, in an attempt to improve fitting work quality. The workpiece may be any kind of item subject to work in the robot system.

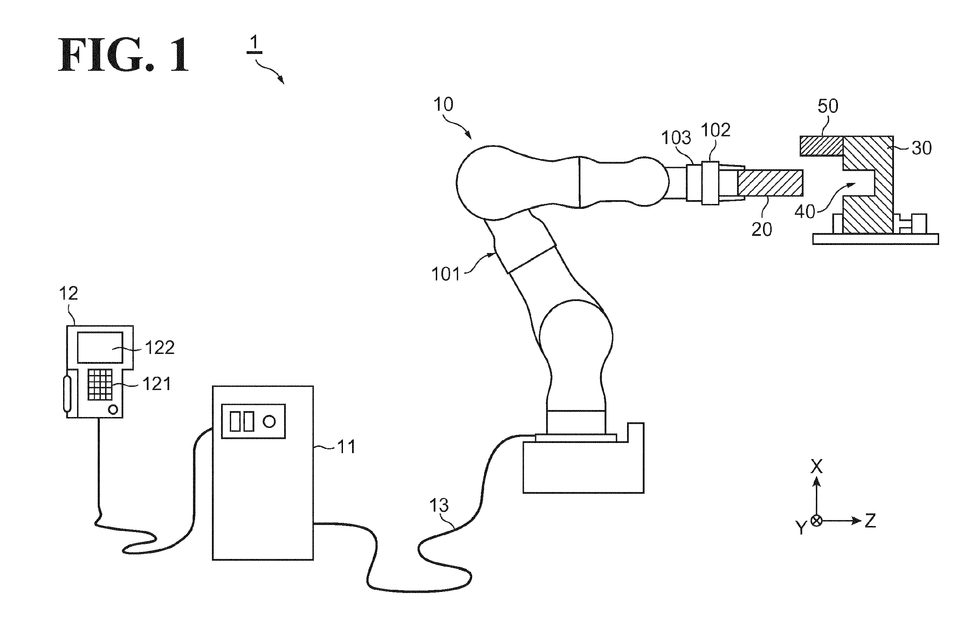

FIG. 1 is a diagram schematically illustrating the robot system according to this embodiment. As shown in FIG. 1, a robot system 1 according to this embodiment includes a robot 10, a hand (fitting member holder) 102, a receiver member 30, a controller (robot controller) 11, and a portable teaching operation panel 12. The hand 102 is mounted to the distal end of the robot 10 to serve as an end effecter that is capable of holding a fitting member 20. The receiver member 30 has a depression into which the fitting member 20 is to be fitted. The controller 11 controls the robot 10. The portable teaching operation panel 12 is an interface between a teacher and the robot 10.

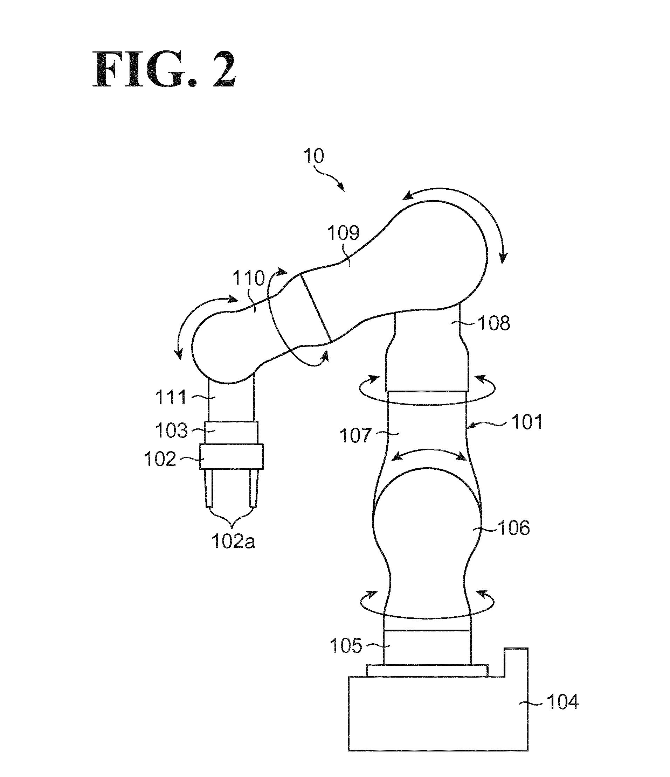

The robot 10 will be described in detail below by referring to FIG. 2. FIG. 2 is a side view of the robot included in the robot system shown in FIG. 1. As shown in FIG. 2, the robot 10 includes a base portion 105 and a robot arm 101. The base portion 105 is mounted to a base 104. The robot arm 101 extends upward from the base portion 105. The robot 10 operates based on an operation command from the controller 11.

The robot arm 101 is made up of first to sixth arms 106 to 111 coupled to each other, in the order from the base end (base portion 105) side. Each of these arms accommodates an actuator to drive the arm into rotation as indicated by the two-headed arrows shown in FIG. 2 at joints where the arms are coupled to each other.

The hand 102 is mounted to the distal end of the robot arm 101. The sixth arm 111, which is at the distal end of the robot arm 101, incorporates an actuator to drive the hand 102 into rotation. The hand 102 incorporates an actuator to drive a pair of holding claws 102a mounted to the distal end of the hand 102.

Between the hand 102 and the sixth arm 111, which is at the distal end of the robot arm 101, an inner force sensor 103 is disposed. The inner force sensor 103 is what is called a 6-axis inner force sensor, which is capable of simultaneously detecting a total of six components, namely, force components in translational three axial directions to act on a detection portion and moment components about rotational three axes.

Under the control of the controller 11, the robot 10 operates the first to the sixth arms 106 to 111, the hand 102, and the holding claws 102a to hold the fitting member 20 at the holding claws 102a and fit the held fitting member 20 into the receiver member 30.

Referring back to FIG. 1, an example of the controller 11 is a computer including an arithmetic operation device, a storage device, and an input-output device. The controller 11 generates an operation command to control the operation of the robot 10. Specifically, the controller 11 is coupled to the actuators of the robot 10 through a cable harness 13, and uses the operation command to drive the actuators, thereby controlling the operation of the robot 10. The controller 11 is also coupled to the inner force sensor 103 through the cable harness 13.

The operation command is a command as a program to activate the robot 10 or a combination job of programs to activate the robot 10. For example, a command to hold the fitting member 20 on the holding claws 102a, a command to fit the held fitting member 20 into the receiver member 30, and other commands are set in advance as the operation command. This ensures that normally, the robot 10 automatically performs its fitting work according to the operation command. However, for unexpected reasons such as when the fitting member 20 held by the robot 10 is significantly heavy, the position of the robot 10 may change after the robot 10 has held the fitting member 20, or the position of the receiver member 30 may change. This can make it difficult for the robot 10 to perform accurate fitting work. For accurate fitting work, the controller 11 has the following function.

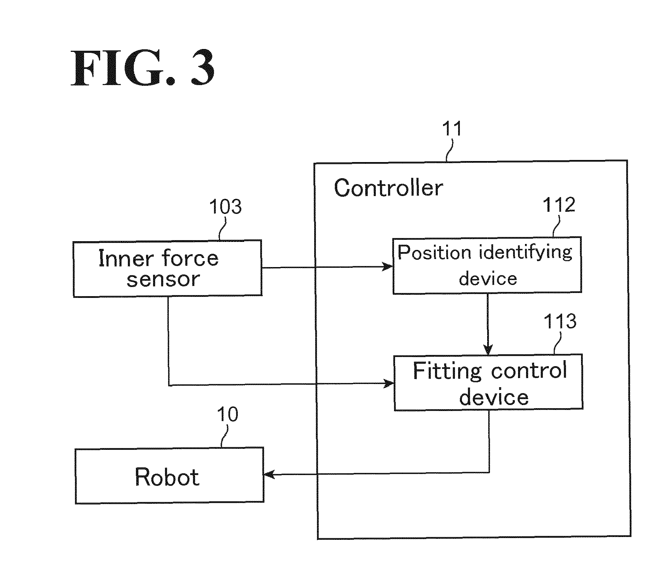

The function of the controller 11 will be described below by referring to FIG. 3. FIG. 3 is a functional block diagram of the controller 11. As shown in FIG. 3, the controller 11 includes a position identifying device 112 and a fitting control device 113. The position identifying device 112 identifies the fitting position of the fitting member 20 relative to the receiver member 30. Specifically, the position identifying device 112 brings at least one of the robot 10, the fitting member 20, and the hand 102 into contact with a position determination member 50 (see FIG. 1) with the hand 102 holding the fitting member 20. The position determination member 50 is disposed at a fixed position relative to the receiver member 30. Then, the position identifying device 112 identifies a fitting position 40 (see FIG. 1) based on the position of the contact as a reference position. The identification of the fitting position 40 by the position identifying device 112 will be described in detail below.

The controller 11 sets operation commands into the robot 10 in advance. The operation commands include a command to control the holding claws 102a (the hand 102) to hold the fitting member 20, and a command to, while the holding claws 102a (the hand 102) are holding the fitting member 20, control the robot arm 101 to move by a predetermined section from the position at which the holding claws 102a have held the fitting member 20. As shown in FIG. 1, a position determination member 50 is disposed at a fixed position relative to the receiver member 30.

The position determination member 50 has a shape corresponding to the outer shape of at least one of the robot 10, the fitting member 20, and the hand 102. Here, the position determination member 50 has a cubic shape corresponding to the fitting member 20, which has a cubic shape. The position determination member 50 may be formed integrally with the receiver member 30, or may be formed separately from the receiver member 30 insofar as the position determination member 50 has a fixed relative positional relationship with the receiver member 30. The relative positional relationship between the receiver member 30 and the position determination member 50 is stored in advance in the position identifying device 112 as position-determination-member position information. Specifically, the position-determination-member position information includes information on a spaced-apart distance between the receiver member 30 and the position determination member 50, and information on a direction in which the receiver member 30 is positioned as viewed from the position determination member 50.

Then, the robot 10 moves the robot arm 101 according to the operation command. When this results in a contact of the robot 10, the fitting member 20, or the hand 102 (including the holding claws 102a) with the position determination member 50, the inner force sensor 103 detects the contact. The inner force sensor 103 detects the position of the contact at the robot 10 or another element, as well as detecting a force component involved in the contact. An exemplary manner of the inner force sensor 103's detection of the position of the contact is as follows. Based on the force and moment detected by the inner force sensor 103, a line of action of force is calculated. Then, the intersection between the line of action of force and the surface of the robot 10 or another element is derived as the position of the contact.

The information on the contact detected by the inner force sensor 103 is input into the position identifying device 112 of the controller 11 from the inner force sensor 103 through the cable harness 13. When the position identifying device 112 receives the information on the contact from the inner force sensor 103, the position identifying device 112 sets the position of the contact as the reference position. Then, based on the position-determination-member position information, the position identifying device 112 identifies, as a fitting position 40, a position apart from the reference position by the spaced-apart distance between the receiver member 30 and the position determination member 50 in the direction in which the receiver member 30 is positioned. The fitting position 40 is identified based on positions in three directions (namely, a position in a first direction, a position in a second direction, and a position in a third direction). Here, the third direction is a direction in which the fitting member 20 is fitted into the receiver member 30 (that is, a Z direction). The first direction is a direction orthogonal to the third direction (that is, an X direction). The second direction is a direction orthogonal to the first direction and the third direction (that is, a Y direction). In FIGs. 1, 4, and 5, the first direction and the second direction may be mutually interchangeable. In other words, in FIGs. 1, 4, and 5, the X direction may be the second direction, and the Y direction may be the first direction. Here, the position identifying device 112 inputs information on the identified fitting position 40 into the fitting control device 113.

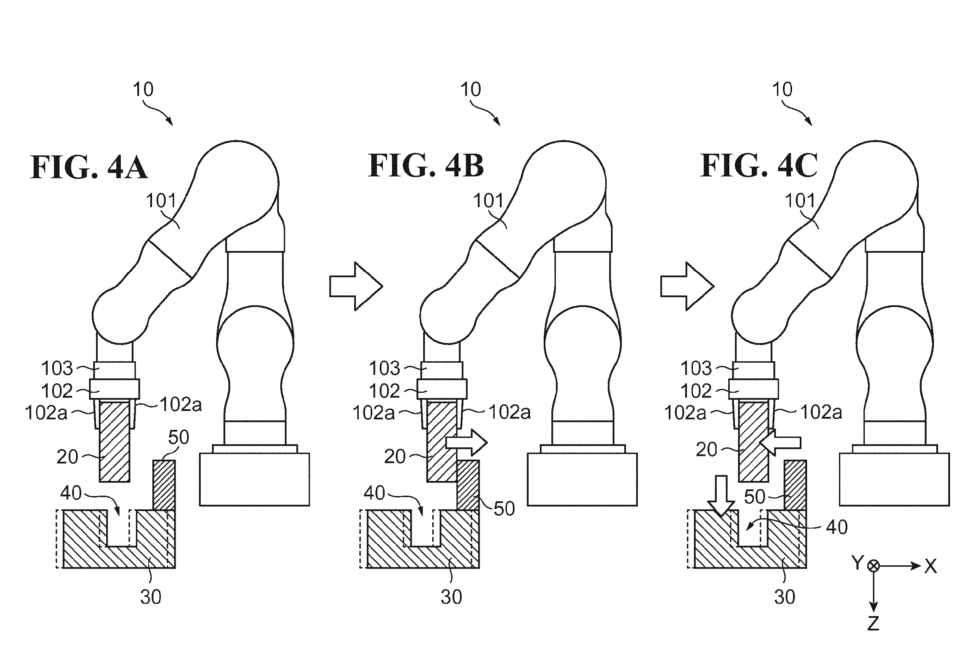

By referring to FIGs. 4A to 4C, images associated with identifying the fitting position 40 will be described below. FIGs. 4A to 4C illustrate images associated with identifying the fitting position 40 according to this embodiment. As shown in FIG. 4A, it is assumed that, with the robot 10 holding the fitting member 20 in the holding claws 102a, the receiver member 30 is displaced in the X direction, which is the first direction, from the original fitting position indicated by the broken line. It is also assumed here that the receiver member 30 is neither displaced in the Y direction, which is the second direction, or in the Z direction, which is the third direction.

Then, the controller 11 generates a command as an operation command to the robot 10 holding the fitting member 20. The command is to the effect that the robot arm 101 moves by a predetermined section. As shown in FIG. 4B, the fitting member 20 is brought into contact with the position determination member 50.

In this case, the inner force sensor 103 detects the contact and inputs information on the detected contact into the position identifying device 112 of the controller 11. The position identifying device 112 stores in advance the position-determination-member position information, and thus uses the position-determination-member position information to identify, as the fitting position 40 shown in FIG. 4C, a position to which the robot arm 101 is moved in the X direction, which is the first direction, by the spaced-apart distance between the receiver member 30 and the position determination member 50. While in FIGs. 4A to 4C the fitting position 40 is identified under the assumption that the fitting position 40 is displaced only in the X direction, a similar manner of identifying the fitting position 40 is also possible when the fitting position 40 is displaced in the Y direction and/or in the Z direction.

Based on the position of the contact, the position identifying device 112 detects a position displacement of the fitting member 20 relative to the receiver member 30, and identifies the fitting position 40 based on the degree of the detected position displacement. The position identifying device 112 identifies the degree of the position displacement based on the position of the contact of at least one of the robot 10, the fitting member 20, and the hand 102 with the position determination member 50 (hereinafter referred to as the position of the contact at the robot 10 or another element), based on the position of the contact of the position determination member 50 with at least one of the robot 10, the fitting member 20, and the hand 102 (hereinafter referred to as the position of the contact at the position determination member 50), and based on the position-determination-member position information.

The inner force sensor 103 detects the position of the contact at the robot 10 or another element as described above. Specifically, the position identifying device 112 identifies the position of the contact at the robot 10 or another element based on the information on the contact input from the inner force sensor 103. Also, the position of the contact at the position determination member 50 is identified in such a manner that the robot 10 or another element is brought into contact with the position determination member 50 from the X direction, or from the X direction and the Y direction, or from the X direction, the Y direction, and the Z direction. That is, the position identifying device 112 identifies the position of the contact at the position determination member 50 in the X direction by bringing the robot 10 or another element into contact with the position determination member 50 from the X direction. The position identifying device 112 identifies the position of the contact at the position determination member 50 in the Y direction by bringing the robot 10 or another element into contact with the position determination member 50 from the Y direction. The position identifying device 112 identifies the position of the contact at the position determination member 50 in the Z direction by bringing the robot 10 or another element into contact with the position determination member 50 from the Z direction.

The position identifying device 112 stores in advance the position-determination-member position information for each of positions on the position determination member 50. Specifically, for each of the positions on the position determination member 50, the position identifying device 112 stores the spaced-apart distance between the position determination member 50 and the receiver member 30 in each of the directions.

The position identifying device 112 identifies the degree of the position displacement in the following manner. First, the position of the contact at the position determination member 50 is identified, and based on the position-determination-member position information, the spaced-apart distance relative to the receiver member 30 at the position of the contact at the position determination member 50 is identified for each of the directions. Next, the degree of the position displacement is identified based on the identified spaced-apart distance and another parameter in consideration of the position of the contact at the robot 10 or another element. Thus, the fitting position 40 is identified.

Specifically, for example, it is assumed that the spaced-apart distance relative to the receiver member 30 at the position of the contact at the position determination member 50 is identified as 20 centimeters (cm) in the X direction, 30 cm in the Y direction, and 0 cm in the Z direction. Then, it is assumed that the position of the contact at the robot 10 or another element is identified as a position at 10 cm toward the holding claws 102a in the Z direction from the distal end of the fitting member 20. In this case, the degree of the position displacement is identified as 20 cm in the X direction, 30 cm in the Y direction, and 10 cm in the Z direction.

It is also possible to make the shape of the position determination member 50 correspond to the shape of at least one of the robot 10, the fitting member 20, and the hand 102, to identify the position of the contact at the robot 10 or another element and the position of the contact at the position determination member 50, and thus to identify the fitting position 40. Specifically, for example, to identify the position of the contact at the position determination member 50 in the X direction and in the Y direction, instead of bringing the robot 10 or another element into contact with the position determination member 50 from the X direction and the Y direction as describe above, it is possible to bring the robot 10 or another element into contact with the position determination member 50 from the X direction, and to move the robot 10 or another element in the Y direction with the robot 10 keeping contact with the position determination member 50. Then, the position at which the robot 10 or another element is stabilized in accordance with the shape of the position determination member 50 may be identified as the position of the contact in the X direction and the Y direction. In this case, the position at which the robot 10 or another element is stabilized is determined as a single portion. This ensures that the position of the contact at the robot 10 or another element can be identified at the same time. The robot 10 or another element may be stabilized in accordance with the shape of the position determination member 50 by the use of an impedance control technique, described later.

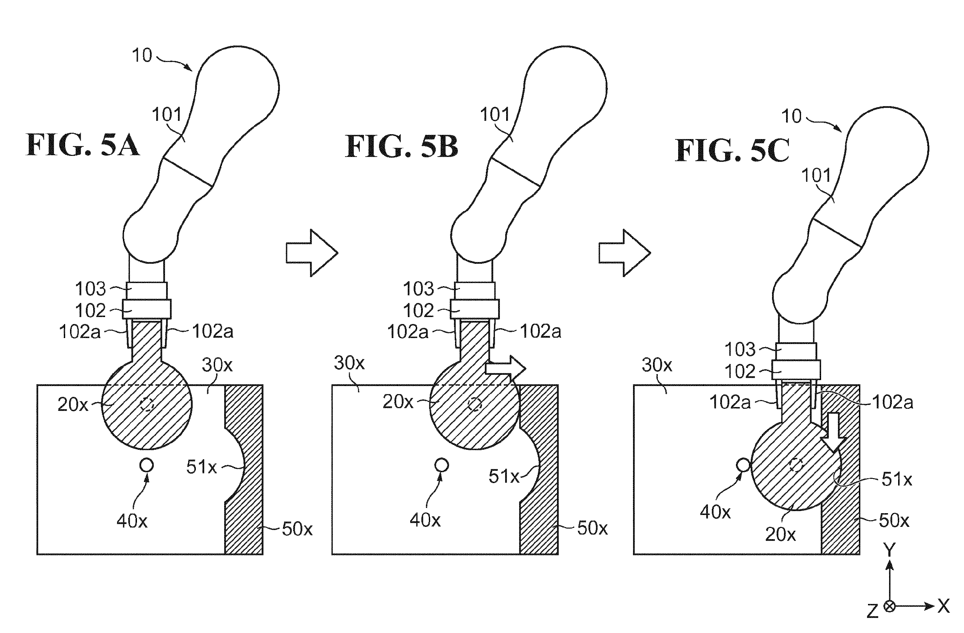

By referring to FIGs. 5A to 5C, images associated with identifying a fitting position 40 corresponding to the shape of the position determination member 50 will be described below. FIGs. 5A to 5C are top views of the robot 10, illustrating images associated with identifying a fitting position corresponding to the shape of the position determination member. As shown in FIG. 5A, the holding claws 102a of the robot 10 are holding a fitting member 20x. The fitting member 20x has a curved side surface and has a solid cylindrical portion, which is indicated by broken lines. The solid cylindrical portion is to be fit into a receiver member 30x. The position determination member 50x has a depressed portion 51x. The depressed portion 51x has a shape corresponding to the shape of the side surface (that is, the curved side surface) of the fitting member 20x. It is noted that the position at which the shape of the depressed portion 51x matches the shape of the side surface of the fitting member 20x is determined uniquely.

First, the controller 11 generates a command as an operation command to the robot 10 holding the fitting member 20x. The command is to the effect that the robot arm 101 moves by a predetermined section in the X direction, which is the first direction. This causes the fitting member 20x to be brought into contact with the position determination member 50x, as shown in FIG. 5B. In this case, the inner force sensor 103 detects the contact and inputs information on the detected contact into the position identifying device 112 of the controller 11. Then, the controller 11 generates another command as an operation command to the robot 10. The command is to the effect that the robot arm 101 moves in the Y direction, which is the second direction, by a predetermined section.

When the robot 10 moves the robot arm 101 in the Y direction, which is the second direction, in accordance with the operation command from the controller 11, then the side surface of the fitting member 20x reaches a position at which the shape of the side surface of the fitting member 20x matches the shape of the depressed portion 51x of the position determination member 50x (see FIG. 5C). The controller 11 stabilizes the robot 10 in accordance with the shape of the depressed portion 51x. The robot 10 may be stabilized in accordance with the shape of the depressed portion 51x by the use of an impedance control technique, described later.

Then, based on the position at which the robot 10 is stabilized, the position identifying device 112 identifies the position of the contact at the position determination member 50x in the X direction and in the Y direction and identifies the position of the contact at the fitting member 20x. Based on the identified contact positions and the position-determination-member position information, the position identifying device 112 identifies the fitting position 40x.

Referring back to FIG. 3, the fitting control device 113 controls the robot 10 to fit the fitting member 20 into the receiver member 30 at the fitting position 40 identified by the position identifying device 112. The processing that the fitting control device 113 performs is roughly classified into two pieces of processing. One piece of processing is movement processing to move the robot arm 101 of the robot 10 based on information on the fitting position 40 input from the position identifying device 112. The other piece of processing is fitting processing by the use of the impedance control at the fitting position 40 after the movement processing of the robot arm 101.

The fitting processing by the use of the impedance control will be described in detail below. The impedance control is a manner of control by which mechanical impedance (such as inertia, attenuation coefficient, and rigidity) generated when external force acts on the hand of the robot is set at a value convenient for desired work, and the position and force are controlled based on the value. As described above, a prerequisite for the fitting processing is a state in which the fitting member 20 is positioned at the fitting position 40. At the fitting position 40, the fitting control device 113 starts force control and generates an operation command to the robot 10. The operation command is to the effect that the fitting member 20 comes into contact with the receiver member 30 (this command is referred to as a TOUCH command).

When the fitting control device 113 receives information on the contact from the inner force sensor 103, the fitting control device 113 generates an operation command to the robot 10. The operation command is to the effect that the robot 10 performs a hole position search operation. In the hole position search operation, the robot 10 searches for the depression of the fitting position 40 by swinging the robot arm 101 to the right and left. During the hole position search operation, the fitting member 20 keeps contact with the receiver member 30. A position determination pin is provided on the depression of the receiver member 30. The position determination pin helps the fitting member 20 to be fitted into the receiver member 30 in an appropriate orientation. When the hole position search operation is successful, the fitting control device 113 generates another operation command to the robot 10. The operation command is to the effect that the robot 10 performs a position determination pin search operation. In the position determination pin search operation, the robot 10 rotates along the shape of the depression.

When the robot 10 succeeds in the position determination pin search operation, the fitting control device 113 generates an operation command to the robot 10. The operation command is to the effect that the robot 10 inserts the fitting member 20 into the depression of the receiver member 30 (this command is referred to as an INSERT command). Then, in accordance with the operation command, the robot 10 inserts the fitting member 20 into the depression of the receiver member 30. Thus, the force control by the fitting control device 113 ends. After the fitting processing, the robot 10 releases the fitting member 20 in accordance with the operation command of the controller 11 and withdraws. Thus, the functions of the controller 11 have been described above.

Referring back to FIG. 1, the portable teaching operation panel 12 is an interface for the teacher to use to manually operate (JOG) the robot 10 and create or edit an operation program. Main components of the portable teaching operation panel 12 are an operation button group 121 and a display window 122.

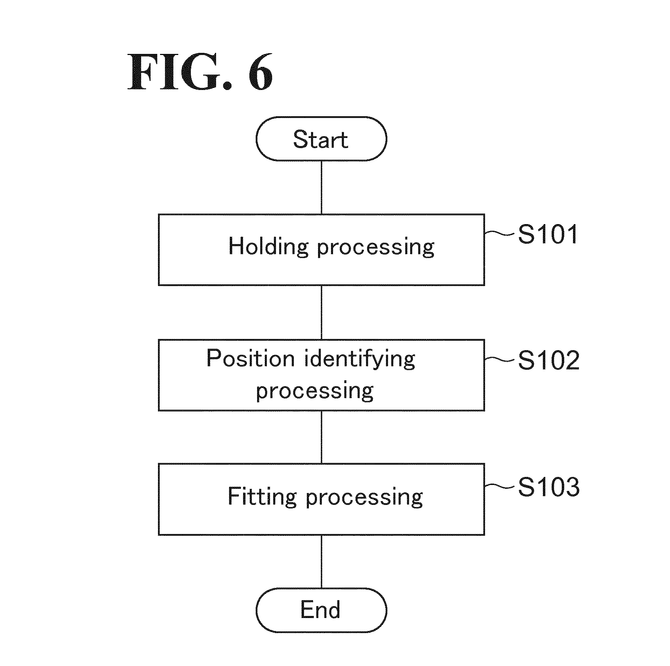

Next, a flow of the series of the fitting work will be described by referring to FIG. 6. FIG. 6 is a flowchart of a procedure for the fitting work. First, in accordance with an operation command set in the controller 11, the holding claws 102a (that is, the hand 102) of the robot 10 hold the fitting member 20 (holding step S101). Then, the position identifying device 112 identifies the fitting position 40 at which the fitting member 20 is fitted into the receiver member 30 (position identifying step S102). Specifically, the fitting position 40 is identified by bringing the robot 10 or another element into contact with the position determination member 50, which is disposed at a fixed position relative to the receiver member 30. Then, the fitting control device 113 controls the robot 10 to fit the fitting member 20 into the receiver member 30 at the fitting position 40 (fitting control step S103). Specifically, with the fitting member 20 set at the fitting position 40, the fitting control device 113 controls the robot 10 by impedance control to fit the fitting member 20 into the depression of the receiver member 30.

In the robot system 1 according to this embodiment, with the hand 102 holding the fitting member 20, at least one of the robot 10, the fitting member 20, and the hand 102 is brought into contact with the position determination member 50, which is disposed at a fixed position relative to the receiver member 30. In this manner, the position identifying device 112 identifies the position of the fitting position 40 for the fitting member 20 and the receiver member 30.

During the robot's fitting work, the relative positions of the fitting member and the receiver member may turn into an unmatched relationship in some cases before the fitting member and the receiver member are fitted to each other (that is, the relative positions of the fitting member and the receiver member can be displaced from each other). A conventional way to accommodate to the position displacement is to set an operation of searching for the receiver member (more specifically, its depression) in the fitting operation during the fitting work. However, if the position displacement is beyond the searchable range of the search operation, accurate fitting work may not be possible, and thus it may be difficult to maintain a constant level of work quality.

In this respect, in the robot system 1 according to this embodiment, the robot 10 or another element is brought into contact with the position determination member 50, which is disposed at a fixed position relative to the receiver member 30, and the fitting position 40 is identified based on the position of the contact as a reference position, as described above. This ensures accurate fitting work even if the position displacement is beyond the searchable range within which (the depression of) the receiver member 30 is searchable. Thus, the fitting work is maintained at a constant level of quality.

The inner force sensor 103 is disposed between the distal end of the robot 10 (that is, the sixth arm 111) and the hand 102. This ensures detection of the force component involved in the contact between the robot 10 or another element and the position determination member 50, and ensures detection of the position of the contact at the robot 10 or another element.

Also, the position identifying device 112 detects the position displacement of the fitting member 20 relative to the receiver member 30 based on the position of the contact, and identifies the fitting position 40 based on the degree of the detected position displacement. This ensures appropriate identification of the fitting position 40 for each contact position. This, in turn, further improves the quality of fitting work.

The position identifying device 112 brings at least one of the robot 10, the fitting member 20, and the hand 102 into contact with the position determination member 50 from the X direction, from the X direction and the Y direction, or from the X direction, the Y direction, and the Z direction so as to identify the position displacement. This ensures appropriate identification of the fitting position 40 for each of the portions where the fitting member 20 and the receiver member 30 are disposed. Specifically, when the displacement of the relative positions of the fitting member 20 and the receiver member 30 is one-dimensional, the robot 10 or another element is brought into contact with the position determination member 50 from the X direction. When the displacement of the relative positions of the fitting member 20 and the receiver member 30 is two-dimensional, the robot 10 or another element is brought into contact with the position determination member 50 from the X direction and the Y direction. When the displacement of the relative positions of the fitting member 20 and the receiver member 30 is three-dimensional, the robot 10 or another element is brought into contact with the position determination member 50 from the X direction, the Y direction, and the Z direction. This ensures appropriate identification of the fitting position 40 for each of the portions where the fitting member 20 and the receiver member 30 are disposed.

The position determination member 50 has a shape corresponding to the shape of at least one of the robot 10, the fitting member 20, and the hand 102. The fitting position 40 is identified based on the position at which the robot 10 or another element is stabilized in accordance with the shape of the position determination member 50. Thus, the robot 10 or another element is brought into contact with the position determination member 50 from one direction. This ensures identification of the fitting position 40 even when the displacement is in two directions or in three directions. That is, this facilitates identification processing of the fitting position 40.

Obviously, numerous modifications and variations of the present invention are possible in light of the above teachings. It is therefore to be understood that within the scope of the appended claims, the invention may be practiced otherwise than as specifically described herein. For example, while in this embodiment the fitting member 20 is fitted into the depression of the receiver member 30, the receiver member may not necessarily have a depression. The fitting member itself may have a depression and the receiver member may have a protrusion, so that the depression of the fitting member may receive the protrusion of the receiver member. While in this embodiment the fitting control device 113 performs the fitting processing by the use of impedance control, any other kind of control is also possible for the fitting processing insofar as the fitting member can be fitted into the receiver member.
1 Robot system
10 Robot
11 Controller (Robot controller)
20, 20x Fitting member
30, 30x Receiver member
40 Fitting position
50, 50x Position determination member
102 Hand (Fitting member holder)
103 Inner force sensor
112 Position identifying device
113 Fitting control device

## Claims

1. A robot system 1, **characterized by**:
a robot 10;
a fitting member holder 102 mounted to a distal end of the robot 10 to hold a fitting member;
a receiver member 30, 30x configured to receive the fitting member;
a position determination member 50, 50x disposed at a fixed position relative to the receiver member 30, 30x; and
a robot controller 11 configured to control the robot 10, the robot controller 11 comprising:
a position identifying device 112 configured to bring at least one of the robot 10, the fitting member 20, 20x, and the fitting member holder 102 into contact with the position determination member 50, 50x with the fitting member holder 102 holding the fitting member 20, 20x, and configured to identify a fitting position based on a position of the contact as a reference position; and
a fitting control device 113 configured to control the robot 10 to fit the fitting member 20, 20x into the receiver member 30, 30x at the fitting position.

2. The robot system 1 according to claim 1, further comprising an inner force sensor 103 disposed between a distal end of the robot 10 and the fitting member holder 102.

3. The robot system 1 according to claim 1 or 2, wherein the position identifying device 112 is configured to detect a position displacement of the fitting member 20, 20x relative to the receiver member 30, 30x based on the position of the contact, so as to identify the fitting position.

4. The robot system 1 according to claim 3, wherein the position identifying device 112 is configured to bring at least one of the robot 10, the fitting member 20, 20x, and the fitting member holder 102 into contact with the position determination member 50, 50x from a first direction, from the first direction and a second direction, or from the first direction, the second direction, and a third direction, so as to detect the position displacement.

5. The robot system 1 according to any one of claims 1 to 4, wherein the position determination member 50, 50x has a shape corresponding to a shape of at least one of the robot 10, the fitting member 20, 20x, and the fitting member holder 102.

6. A method for controlling a robot 10, **characterized by**:
with a fitting member holder 102 mounted to a distal end of the robot 10 being holding a fitting member 20, 20x, bringing at least one of the robot 10, the fitting member 20, 20x, and the fitting member holder 102 into contact with a position determination member 50, 50x, so as to identify a fitting position based on a position of the contact as a reference position, the position determination member 50, 50x being disposed at a fixed position relative to a receiver member 30, 30x, the receiver member 30, 30x being configured to receive the fitting member 20, 20x; and
controlling the robot 10 to fit the fitting member 20, 20x into the receiver member 30, 30x at the fitting position.

7. A method for producing a to-be-processed material, **characterized by**:
holding a fitting member 20, 20x as the to-be-processed material using a fitting member holder 102;
with the fitting member holder 102 holding the fitting member 20, 20x, bringing at least one of a robot 10, the fitting member 20, 20x, and the fitting member holder 102 into contact with a position determination member 50, 50x, so as to identify a fitting position based on a position of the contact as a reference position, the position determination member 50, 50x being disposed at a fixed position relative to a receiver member 30, 30x, the receiver member 30, 30x being configured to receive the fitting member 20, 20x; and
controlling the robot 10 to fit the fitting member 20, 20x into the receiver member 30, 30x at the fitting position.
